# EUROPEAN PATENT APPLICATION

(11) **EP 4 074 174 A1**
(43) Date of publication of application: **19.10.2022**
(21) Application number: 22164630.0
(22) Date of filing: 28.03.2022
(51) Int. Cl.: A01K 47/00

(54) **HIVE**

(30) Priority: 15.04.2021 IT 202100009551
(71) Applicant: Honey Badger Planet S.r.l., 26838 Tavazzano Con Villavesco (IT)
(72) Inventor: Bernasconi, Domenico, I-26838 Tavazzano Con Villavesco (IT)
(74) Representative: Lunati & Mazzoni S.r.L.

(57) **Abstract**

It is provided hive (1) comprising a main container (2) comprising external panels (20) each including an external layer (20a) of aluminium alloy and an internal layer (20b) of cork.

## Description

The present invention relates to a hive of the type specified in the preamble to the first claim.

Similar hives are described in patent documents FR-E-56737, FR-A-959463 and DE-C-825022.

Several types of hives are currently known. Hives can be considered as artificial hives and, in particular, each hive is designed to house a colony of bees bred by a beekeeper in order to produce honey and its derivatives, such as wax, poison and propolis.

The various types of existing hives have very different structural characteristics depending on the beekeeper's needs. For example, beekeeping can be permanent or nomadic, and beekeepers can be entrepreneurs or hobbyists.

Hives are generally classified into two categories: traditional or rational. Traditional rustic hives have fixed walls woven from straw. They can also be made of wood or stone, depending on the material available locally. These configurations involve removing and cutting the combs to obtain the honey, so after harvesting, the bees have to rebuild the combs. This type of hive is the oldest because straw has always been an easy material to find and weave and has excellent insulating and waterproof properties. The rational hives, on the other hand, contain movable frames inside them that allow the honey to be extracted without destroying the nest. Today, rational hives are the main type used in beekeeping. These hives can have two types of frame extraction: vertical or posterior.

The most commonly used type is vertical extraction. The following is a description of a Langstroth-type hive, with subsequent modifications, to illustrate the essential components of this structure.

A hive is generally made up of several parts that are assembled together, giving it a cubic or parallelepiped shape. It has a bottom that can be raised from the ground by means of platforms, which is the support base for the whole hive. This bottom was originally was a panel firmly connected to the rest of the structure. The advent of the varroa mite has made it necessary to replace the traditional bottom with a net and a removable tray in order to control the possible presence of this ectoparasite in the hive. Above this is the nest, made up of four wooden panels, generally fir in Italy, to house the frames. They are made up of four wooden strips, of which the upper one is the longest and supports the whole frame by resting on the cavities at the front and back of the nest. The frame is "reinforced" by passing a wire through it vertically and/or horizontally and at several points, on which the wax sheet is placed to aid the construction of the shallow box.

In addition, at the front of the hive, near the nest, there is a small wooden door or a metal grid that allows the bees to enter and exit but prevents access by larger animals or insects.

On top of the nest there may be a metal or plastic grid, known as a queen excluder, with appropriately calibrated mesh to allow only worker bees to pass through and to block the queen bee inside the nest. Next is the shallow box, a box, generally made of firwood, which also houses the frames that may not contain any brood due to the presence of the queen excluder. It is usually lower in height than the nest and houses one less frame so that the combs become thicker and the uncapping operation easier. A crown board, i.e. a container, preferably made of wood, is placed on the shallow box and/or the nest and is used to keep the cover raised. The cover has a hole generally used to feed the bees without opening the hive.

The cover is generally made of sheet metal to provide greater protection from the atmospheric agents.

In addition to the classic wooden hives, structures made of alternative materials or combinations of common materials are becoming increasingly popular on the market. The panels that enclose the hive can be made of polymeric materials such as polyurethane, polystyrene or polyethylene. In addition, such panels may have a single layer or several mutually coupled layers. For example, hives have been made with triple-layer panels. Such panels have an inner and external layer made of aluminium and a middle layer made of polymeric material to provide thermal insulation. Aluminium is known for its strength but does not prevent condensation from forming inside the hive.

The hives with panels made of composite materials are also known. Generally, these composite materials have a base containing cork and other wooden materials to which a polymer is added to give the structure mechanical strength. These solutions are particularly economical and reduce internal humidity, but do not guarantee high resistance to atmospheric agents.

Hives made of plastic material are becoming more and more common, and are often internally coated with polyurethane foam or food polymers for insulation purposes. These hives are lighter and therefore easier to move for nomadic beekeeping, and have good weather resistance.

The known technique described includes some major drawbacks.

In particular, wooden and polyester hives do not have good long-term resistance to weathering and attacks by wild animals.

In addition, as wood is a porous material, impermeability is not guaranteed.

The aluminium provides good resistance against atmospheric agents but favours the formation of condensation, creating a particularly humid interior environment.

The composite materials prevent the formation of internal condensation and are light but have a limited lifespan as they are easily degraded by external agents.

In plastic hives, the insulating polymer layer, if made of polystyrene or similar, is subject to condensation and is easily damaged by insects or the bees themselves.

In this situation, the technical task at the basis of the present invention is to devise a hive capable of substantially obviating at least part of the aforementioned drawbacks. In the context of said technical task, it is an important aim of the invention to obtain a strong and durable hive.

Another important aim of the invention is to achieve a thermally insulating and internally anti-condensation structure.

Furthermore, it is desirable that the hive be externally waterproof.

The specified technical task and purposes are achieved by a hive as claimed in the annexed claim 1.

Preferred technical solutions are highlighted in the dependent claims.

The features and advantages of the invention are hereinafter clarified by the detailed description of preferred embodiments of the invention, with reference to the annexed drawings, wherein:

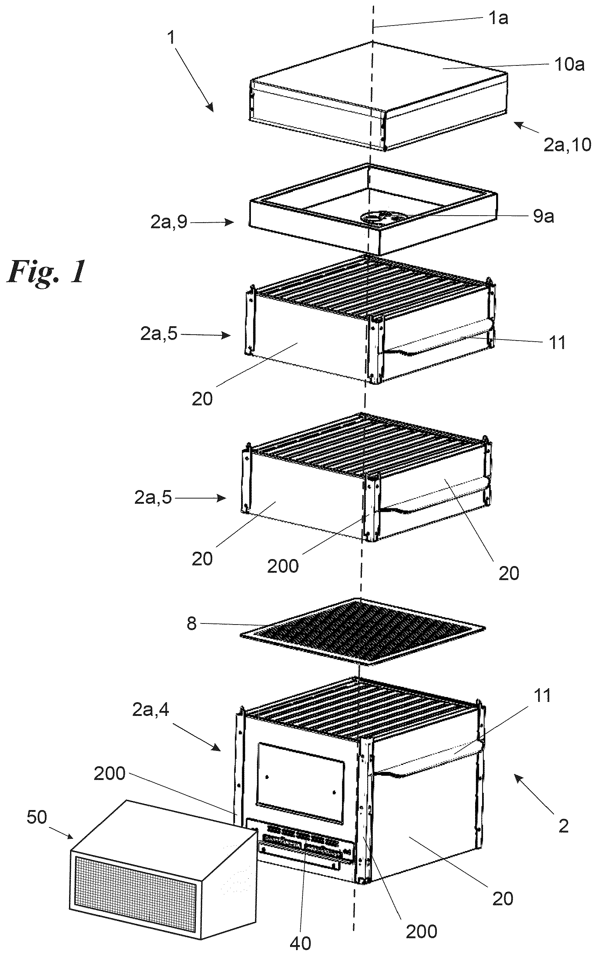

the **Fig. 1** shows, in exploded view, a hive according to the invention;

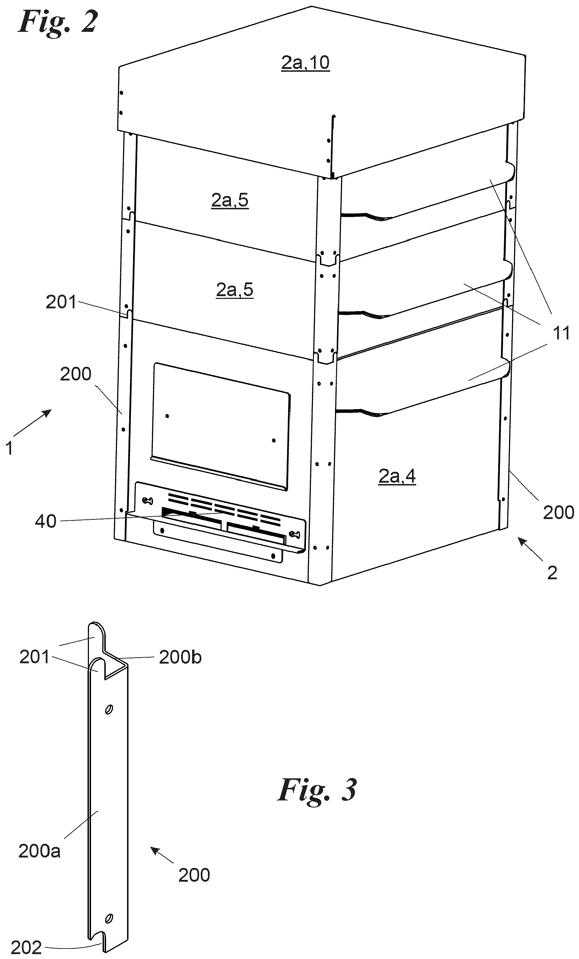

the **Fig. 2** illustrates, in axonometry, a hive according to the invention;
the **Fig. 3** shows, in axonometry, a portion of a hive according to the invention;

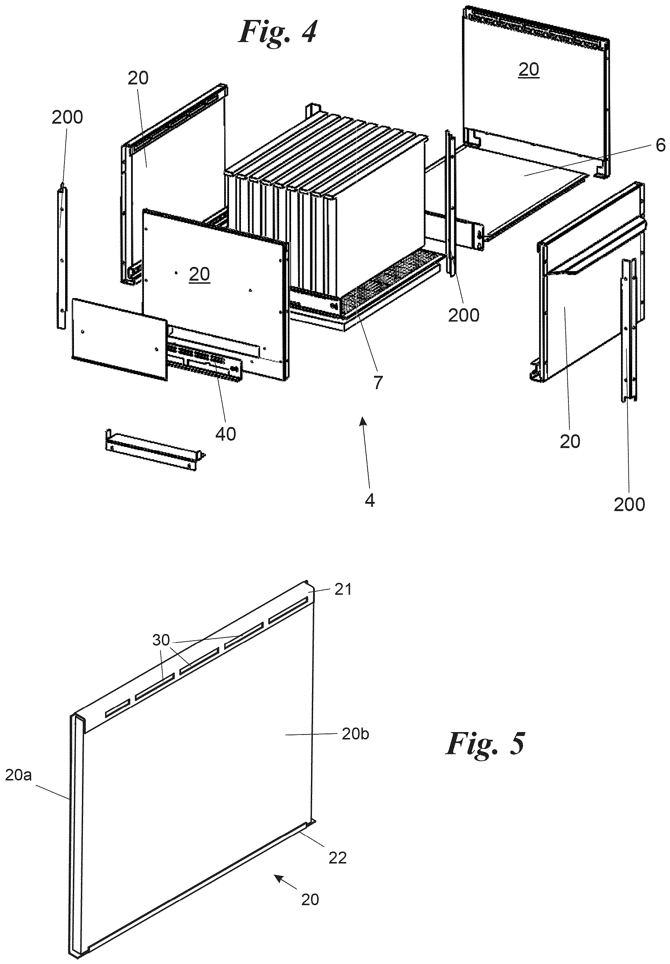

the **Fig. 4** shows, in exploded view, another portion of the hive according to the invention; and
the **Fig. 5** shows, in axonometry, a further portion of the hive according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the hive according to the invention is globally referred to as number **1**.

The hive 1 comprises, in summary, a main container **2** comprising external panels **20**. In particular, said container comprises a plurality of units **2a**. Said units 2a comprise, for example, a nest **4** and at least one shallow box **5** which are assembled in a resolvable way together.

The hive 1 is preferably placed on a platform, which is not part of the hive, having the purpose of lifting it off the ground. The platform and the hive 1 are substantially constrained by friction. Alternatively, they may be constrained by screws or otherwise. Said main container 2 preferably develops predominantly in a vertical direction, identifying a main axis **1a**.

The main container 2 may further comprise units **2a** comprising a crown board **9** and a cover **10**. Such components are per se known to the technician in the field.

The external panels 20 delimit the outer surface of the individual units 2a constituting the main container 2 and which are preferably mutually separated and constrained, as described below.

The external panels 20 preferably comprise two layers: an external layer **20a** and an internal layer **20b**.

The external layer 20a is preferably made of metallic material, more preferably aluminium alloy, for example alloy type 1000 as it is intended for food use. Furthermore, it has a thickness of preferably between 1 mm and 2 mm.

The internal layer 20b is preferably made of a woody material, more preferably it is made of cork. It has a thickness of dimensions preferably between 1.5 cm and 4 cm. More preferably, the two layers 20a, 20b are respectively made exclusively of the indicated materials.

The layers 20a, 20b may be solidly constraint to each other. In particular, the external layer 20a preferably includes an upper guide **21** and a lower guide **22**. These guides allow the internal layer 20b to be inserted, preferably by scrolling, and held in position. In other words, the internal layer 20b is removably constrained to the external layer 20a by the guides 21, 22. Thus, the hive 1 substantially defines a load-bearing structure, made by the external layers 20b i.e. the aluminium panels, which can support a non-load-bearing inner padding or filling, made by the internal layers 20b i.e. the cork panels, which can be removed when desired without changing the overall structure of the hive 1.

The internal layers 20b can substantially be inserted and removed when desired. The holes **30** are also preferably drilled along the upper guide 21, preferably rectangular.

The panels 20 are preferably constrained to each other by means of assembly means **200** placed in correspondence with the lateral edges of the main container 2. They preferably comprise corner profiles, each suitably constrained to two panels 20 preferably by means of screws or by interlocking or adhesives or similar.

The assembly means 200 are preferably made of metallic material, more preferably aluminium alloy. Furthermore, such means have development predominantly in a direction parallel to the axis 1a, preferably this dimension is equal to the height of the panels 20.

The units 2a, in particular the nest 4 and the shallow box 5, are delimited externally, and preferably substantially constituted, by the panels 20. They are assembled together along the main axis 1a preferably in a resolvable manner, more preferably by interlocking. In particular, they are preferably assembled together by means of angular assembly means 200 that prevent mutual movement in a plane perpendicular to the axis 1a.

The assembly means 200 comprise two portions **200a, 200b** that are mirrored with respect to a plane passing through the axis 1a and preferably forming a right angle with each other.

These portions are preferably made from a single piece of material.

Each of the two portions 200a and 200b presents at one end a curved protrusion **201** and at the opposite end presents a cavity **202**. In particular, each cavity 202 is suitably shaped in order to accommodate the curved protrusion 201 of a second assembly means 200 and thus allow two assembly means to interlock with each other. The geometry of the means of assembly 200 allows to bind by interlocking the units 2a, preferably it allows to constrain in a resolvable way the nest 4 and the shallow box 5. The panels 20 delimiting the nest 4 have side lengths of preferably between 40 cm and 50 cm and height of preferably between 30 cm and 40 cm. The panels 20 delimiting the shallow box 5 have a base side of length equal to the length of the panels delimiting the nest and a height of dimensions preferably between 15 cm and 20 cm. A particular type of nest 5 has panels 20 of a height equal to the panels 20 of nest 4.

The panels 20 placed on the sides also preferably comprise handles **11,** preferably made of the same material as the external layer 20a and more preferably obtained by folding the same external layer 20a.

The nest 4 and the shallow box 5 comprise, within them, a series of rectangular frames preferably made of wood, as in hives of the traditional type. The frames are parallel to each other and are preferably arranged parallel to the axis 1a. In particular, the frames have an upper bar with a protruding edge.

On the front panel delimiting the nest 4, in correspondence with the base of support of said panel, there is preferably a grid **40** preferably metal, preferably removable. Such a grid 40 allows bees to enter and exit the hive but precludes access to larger animals or insects.

The hive may further comprise a porch **50** constrained to said front panel in correspondence with the grid 40. The porch 50 is preferably constrained to the nest by releasable constraining means, more preferably by screws or the like.

It comprises a protruding element in a direction perpendicular to the axis 1a. This protruding element is preferably cubic in shape, is frontally open and, at the top, has a sloping roof. The porch 50 is preferably made of the same materials as the hive. Since it can be easily dismantled, it is generally used for nomadic beekeeping.

A removable lower insulation panel **6** is, preferably, placed at the base of the nest 4 and preferably has a double layer structure as described for the panels 20. This panel 6 is constrained to the base of the nest by guides. It is removed from the hive in warm periods to ensure adequate air flow.

Preferably, a bottom net **7** is placed above the insulating panel 6, which is preferably removable. This net is preferably made of wire mesh, preferably aluminium, and is suitable to prevent the entry of pests into the hive.

Preferably, the hive 1 further comprises a queen excluder net **8**, comprising a wire mesh having slots calibrated to allow only worker bees to pass through, preventing the larger queen from accessing the shallow box.

The hive 1 further preferably comprises a crown board 9 in turn comprising an associated closure **9a** consisting of a sheet of preferably metal, for example aluminium, and suitably perforated to allow the bees to be fed.

Finally, the cover 10 preferably has, also on the upper wall **10a**, a double layer structure as previously described for the panels 20.

The operation of the hive 1 described above in structural terms is described below.

It is preferably supplied to the user with the units 2a already substantially complete and mutually assembled by the user himself, by means of the mutual interlocking of the assembly means 200 as previously described.

The user can then select and assemble one or more units 2a to create a main container 2 according to his preferences.

Other elements, such as the porch 50, and/or the bottom insulation panel 6, the bottom net 7, the queen excluder net 8 may also be joined to the main container 2 according to the user's preference, climate or season.

Once assembled, the hive is used in a substantially traditional manner.

The hive 1 according to the invention achieves important advantages.

Indeed, it guarantees a longer period of use than hives made of other materials.

Such a hive 1 results waterproof, resistant to external influences and for a long time, in particular thanks to the external layer 20a made of aluminium. In addition, the external layer can be customised, e.g. by means of colouring by painting or anodising or laser engraving and marking or application of nameplates and even more.

It also has good insulating and anti-condensation properties, conferred in particular by the internal layer 20b made of cork.

Hive 1 has a structure that is completely recyclable from a technical point of view and is economically viable compared to traditional wooden, polyethylene, polyester and polyurethane structures, as it is maintenance-free and more durable.

The removable bottom insulation panel ensures optimal insulation in both hot and cold weather.

The removable bottom net 7 allows the hive to be easily cleaned.

The removable front porch 50 makes the hive suitable for both stationary and nomadic beekeeping.

The invention is susceptible to variations within the inventive concept as defined by the claims.

Within this scope, all details are substitutable by equivalent elements and the materials, shapes and dimensions can be any.

## Claims

1. Hive (1) comprising a main container (2) comprising external panels (20), **characterised by** that said external panels (20) each comprise an external layer (20a) of aluminium alloy and an internal layer (20b) of cork.

2. Hive (1) according to claim 1, wherein said external layer (20a) and said internal layer (20b) are integrally constrained to each other.

3. Hive (1) according to claim 1, wherein said internal layer (20b) has a thickness of between 1.5 cm and 4 cm.

4. Hive (1) according to any one of the preceding claims, wherein said main container (2) comprises a plurality of units (2a) comprising at least one nest (4) and one shallow box (5).

5. Hive (1) according to any one of the preceding claims, wherein said units (2a) are assemblable with each other along a main axis (1a) in a resolvable manner.

6. Hive (1) according to any one of the preceding claims, wherein said units (2a) are assembled together by means of assembly means (200) placed near the lateral edges of said main container (2), said means (200) preventing mutual movement in a plane perpendicular to said axis (1a).

7. Hive (1) according to any one of the preceding claims, comprising a removable lower insulating panel (6).

8. Hive (1) according to any one of the preceding claims, comprising a removable bottom net (7).

9. Hive (1) according to any one of the preceding claims, comprising a removable front porch (50) comprising a cubic shaped element (50a) projecting in a direction perpendicular to said axis (1a), open frontally and being surmounted by a sloping roof (50b).

10. Hive (1) according to claim 1 above, wherein said front porch (50) is constrained frontally to said nest (4) by releasable constraint means.
